Europäisches Patentamt

European Patent Office

Office européen des brevets

(11) Veröffentlichungsnummer: 0 294 839
A1

# (12) EUROPÄISCHE PATENTANMELDUNG

(21) Anmeldenummer: 88109299.3

(22) Anmeldetag: 10.06.88

(51) Int. Cl.⁴: B63B 35/82

(30) Priorität: 12.06.87 DE 3719641
06.07.87 DE 3722231
03.07.87 DE 3722026

(43) Veröffentlichungstag der Anmeldung:
14.12.88 Patentblatt 88/50

(84) Benannte Vertragsstaaten:
AT BE CH DE ES FR GB GR IT LI LU NL SE

(71) Anmelder: Marker, Hannes
Alpspitzstrasse 37
D-8100 Garmisch-Partenkirchen(DE)

(72) Erfinder: Marker, Hannes
Alpspitzstrasse 37
D-8100 Garmisch-Partenkirchen(DE) .

(74) Vertreter: Dipl.-Phys.Dr. Manitz Dipl.-Ing.,
Dipl.-Wirtsch. Finsterwald Dipl.-Ing. Grämkow
Dipl.-Chem.Dr. Heyn Dipl.-Phys. Rotermund
Morgan, B.Sc.(Phys.) Robert-Koch-Strasse 1
D-8000 München 22(DE)

(54) Längenverstellbarer Gabelbaum.

(57) Die Erfindung betrifft einen längenverstellbaren Gabelbaum mit einem vorderen und einem hinteren Gabelbaumteil. Dabei sind Endabschnitte von Holmstücken (1) vorzugsweise des hinteren Gabelbaumteils in rohrförmige Holmstücke (2) des vorderen Gabelbaumteils eingesetzt und mit diesen in ausgewählter Einschublänge durch jeweils ein über eine Muffe (3) mit dem äußeren Holmstück (2) verbundenes Sperrglied (10, 11, 11', 12, 13) kraftschlüssig verbindbar. Jedes in seiner Sperrstellung an der Außenseite des zugehörigen inneren Holmstücks (1) klemmend anliegende Sperrglied (10, 11, 11', 12, 13) ist so an der Muffe (3) gelagert, daß es beim Herausziehen des inneren Holmstücks (1) aus dem äußeren in eine Freigabestellung bewegbar ist.

FIG 1

EP 0 294 839 A1

Die Erfindung betrifft einen längenverstellbaren Gabelbaum mit einem vorderen und einem hinteren Gabelbaumteil, wobei Endabschnitte von Holmstücken vorzugsweise des hinteren Gabelbaumteils in rohrförmige Holmstücke des vorderen Gabelbaumteils eingesetzt und mit diesen in ausgewählter Einschublänge durch jeweils ein über eine Muffe mit dem äußeren Holmstück verbundenes Sperrglied kraftschlüssig verbindbar sind.

Bei einem derartigen bekannten Gabelbaum (JP-OS 58-63595) ist zur Verbindung des hinteren Gabelbaumteils mit dem vorderen Gabelbaumteil auf ein inneres Holmstück, das in ein äußeres eingeschoben ist, ein Klemmring aufgeschoben, der mittels einer unmittelbar auf das äußere Holmstück aufgeschraubten Überwurfmutter so gegen die Stirnseite des äußeren Holmstücks gedrückt wird, daß dadurch eine Klemmkraft erzeugt wird, die das innere Holmstuck im äußeren Holmstück festklemmt.

Um bei diesem bekannten Gabelbaum eine Längenverstellung vorzunehmen zu können, muß die Überwurfmutter gelöst werden, so daß die Klemmwirkung des Klemmrings beseitigt ist und das innere Holmstück auf die gewünschte Einschublänge verschoben werden kann. Anschließend wird die Überwurfmutter wieder angezogen, bis die erforderliche Klemmung erreicht ist.

Bei einem anderen bekannten längenverstellbaren Gabelbaum (EP-OS 0 209 756) ist in das äußere Holmstück eine Muffe eingesetzt, die einen konisch erweiterten Abschnitt und ein daran anschließendes Innengewinde aufweist. Auf das innere Holmstück ist eine Mutter mit einem Außengewinde aufgeschoben, die auf ihrer der Muffe zugewandten Seite einen trichterförmigen konischen Abschnitt besitzt. Dem konischen Abschnitt der Mutter zugeordnet ist außerdem ein Klemmring auf das innere Holmstück aufgeschoben. Wird nun die Mutter in die Muffe eingeschraubt, so wird der Klemmring von den konischen Abschnitten erfaßt und axial feststehend am äußeren Holmstück gehalten. Gleichzeitig wird der Klemmring fest gegen das innere Holmstuck gedrückt, so daß dieses mit dem äußeren Holmstück verklemmt ist.

Eine Längenveränderung ist bei diesen bekannten Gabelbäumen relativ umständlich, da zunächst die jeweilige Klemmmutter gelöst werden muß. Anschließend können dann die inneren Holmstücke gegenüber den äußeren verschoben werden. Dabei kann es jedoch vorkommen, daß sich der Klemmring beim Verschieben zwischen dem inneren Holmstück und dem äußeren Holmstück bzw. der Muffe oder zwischen dem inneren Holmstück und der Mutter verklemmt, wodurch die Verschiebung des inneren Holmstück im äußeren Holmstück zur Längenverstellung behindert werden kann.

Ein weiterer Nachteil bei diesen bekannten Gabelbäumen besteht darin, daß mit den entsprechenden Muttern eine erhebliche Klemmkraft für den Klemmring aufgebracht werden muß, um eine sichere Verbindung zwischen dem äußeren und dem inneren Holmstück zu bewirken. Dies kann insbesondere für Frauen relativ schwierig sein, da sie die Muttern nicht immer mit der erforderlichen Kraft anziehen können.

Der Erfindung liegt demgegenüber die Aufgabe zugrunde, einen längenverstellbaren Gabelbaum der eingangs genannten Art so weiterzubilden, daß stets eine sichere kraftschlüssige Verbindung der Holmstücke gewährleistet und gleichzeitig die Längenverstellung auf einfache und bequeme Weise möglich ist.

Diese Aufgabe wird erfindungsgemäß dadurch gelöst, daß jedes in seiner Sperrstellung an der Außenseite des zugehörigen inneren Holmstücks klemmend anliegende Sperrglied so an der Muffe gelagert ist, daß es beim Herausziehen des inneren Holmstücks aus dem äußeren in eine Freigabestellung bewegbar ist.

Durch die erfindungsgemäße Ausbildung des Sperrgliedes wird erreicht, daß das hintere und das vordere Gabelbaumteil in Einschubsrichtung gegeneinander verriegelt sind, während in Auszugsrichtung, in der beim Einsatz des Gabelbaums normalerweise keine Krafte wirken, eine Verschiebung der Gabelbaumteile gegeneinander zugelassen wird. Damit ist es zur Verlängerung des Gabelbaums nicht erforderlich, die Sperrglieder vor einer Verlängerung des Gabelbaums von Hand zu lösen, wodurch die Handhabung des erfindungsgemäßen Gabelbaums bei der Verstellung seiner Länge wesentlich vereinfacht wird.

Bei einem vorteilhaften Ausführungsbeispiel der Erfindung ist vorgesehen, daß das Sperrglied durch Federkraft in seine Sperrstellung vorgespannt ist. Hierdurch wird erreicht, daß das Sperrglied stets wieder selbsttätig in seine Sperrstellung zurückkehrt, nachdem es von Hand in seine Freigabestellung gebracht und wieder losgelassen wurde oder nachdem es bei einer Verlängerung des Gabelbaums seine Freigabestellung eingenommen hatte.

Bei einer weiteren Ausgestaltung der Erfindung ist vorgesehen, daß ein Anlageabschnitt des Sperrglieds, mit dem es am inneren Holmstück anliegt, einen Querschnitt aufweist, der demjenigen des zugeordneten Umfangsabschnitts des inneren Holmstücks entspricht. Hierdurch wird eine besonders günstige, kraftschlüssige Verbindung zwischen dem Sperrglied und dem inneren Holmstück geschaffen, wobei gleichzeitig das innere Holmstück im äußeren einwandfrei geführt ist, wenn das Sperrglied in seiner Sperrstellung ist.

Um eine für die Handhabung des Gabelbaums günstige, möglichst glatte Oberfläche der Holme zu schaffen, ist nach einer weiteren Ausgestaltung der Erfindung vorgesehen, daß die das Sperrglied tragende Muffe innerhalb des äußeren Holmstücks angeordnet ist.

Eine vorteilhafte Ausführungsform der Erfindung zeichnet sich dadurch aus, daß das Sperrglied ein um eine zur Längsachse der Holmstücke senkrechte Achse schwenkbarer gebogener Keil ist, der sich in Einschubrichtung verjüngt, wobei der Keil als bogenförmiger Abschnitt an einem Exzenter ausgebildet ist, dessen Anlageabschnitt einen entgegen der Einschubrichtung stetig zunehmenden radialen Abstand von der Schwenkachse aufweist, und wobei der Abstand der Schwenkachse von der Außenseite des inneren Holmstücks größer als der kleinste Radius, jedoch kleiner als der größte Radius des bogenförmigen Abschnitts ist.

Hierdurch wird erreicht, daß der den als bogenförmigen Abschnitt ausgebildeten Keil tragende Exzenter in seiner Sperrstellung mit einer im Zwischenbereich des bogenförmigen Abschnitts liegenden Stelle an der Außenseite des Holmstücks anliegt, so daß der Exzenter, wenn eine Kraft auf das innere Holmstück wirkt, weiter in Sperrichtung verschwenkt wird, wodurch die Klemmkraft vergrößert wird, während bei umgekehrter Kraftrichtung ein freies Ausziehen des inneren Holmstücks aus dem äußeren ermöglicht ist.

Somit wird erfindungsgemäß bei diesem Ausführungsbeispiel eine sich selbst verstärkende Verklemmung der Holmstücke gegeneinander mittels des Exzenters erreicht, so daß erfindungsgemäß eine selbstsichernde Verbindung der beiden Holmstücke miteinander geschaffen ist.

Um die Kraftübertragung vom inneren Holmstück auf den Exzenter zu verbessern und gleichzeitig einen möglichst hohen Klemmdruck sicherzustellen, zeichnet sich eine vorteilhafte Weiterbildung der Erfindung dadurch aus, daß der Anlageabschnitt des Exzenters einen in Keilrichtung zackenförmigen Verlauf aufweist.

Bei einer vorteilhaften Weiterbildung der Erfindung ist vorgesehen, daß dem Exzenter ein Betätigungselement zugeordnet ist, wobei das Betätigungselement ein sich in Einschubrichtung erstreckender Hebel ist, der von einer die Vorspannkraft erzeugenden Feder beaufschlagt ist. Auf diese Weise läßt sich eine einfache Möglichkeit zum Verschwenken des Exzenters von Hand in seine Freigabestellung schaffen, wobei gleichzeitig das als Hebel ausgebildete Betätigungselement als Kraftübertragungselement für die den Exzenter in seiner Sperrstellung haltende Vorspannkraft ist.

Bei einem anderen Aüsführungsbeispiel der Erfindung ist vorgesehen, daß der Keils als ein sich höchstens über 180° erstreckender, in seiner Sperrstellung fest gegen die oberfläche des inneren Holmstücks gedrückter Ringabschnitt ausgebildet ist, dessen in Einschubrichtung gelegene Kante abgerundet ist und in der Sperrstellung zwischen das innere und das äußere Holmstück bzw. die Muffe eingreift, wobei der Ringabschnitt am Ende eines Sperrhebels angeordnet ist, der um die Schwenkachse schwenkbar gelagert ist, wobei der Sperrhebel zusammen mit einem von der Federkraft beaufschlagten, sich im wesentlichen in Einschubrichtung erstreckenden Betätigungshebel einen Winkelhebel bildet.

Hierbei weist der Ringabschnitt einen flächigen Andruckbereich auf, mit dem das innere Holmstück gegen das äußere gedrückt wird. Sobald jedoch die Kraft, die versucht, das innere Holmstück in das äußere hineinzuschieben, anwächst, wird durch die als Keil wirkende abgerundete vordere Kante des Ringabschnitts, die sich zwischen das innere und das äußere Holmstück bzw. die Muffe hineinschiebt, ein zusätzlicher, nahezu linienförmiger Andruckbereich geschaffen, so daß eine zusätzliche Haltekraft erzeugt wird, die mit ansteigender Einschubskraft ebenfalls anwächst.

Bei einer vorteilhaften Weiterbildung der Erfindung ist vorgesehen, daß der Sperrhebel in der Sperrstellung mit einer senkrechten zur Längsachse einen spitzen Winkel $\alpha$ einschließt. Hierdurch wird erreicht, daß der das Sperrglied bildende Ringabschnitt seine maximale Sperrstellung praktisch nicht erreichen bzw. sie auf keinen Fall überschreiten kann. Dadurch wird ein Verringern der Klemmkraft bei steigender Einschubskraft vollständig verhindert.

Um die das innere Holmstück im äußeren haltenden Klemmkräfte umfangsmäßig möglichst gleichmäßig auf das innere Holmstück wirken zu lassen, und es so besonders sicher im äußeren Holmstück zu führen, ist bei einer bevorzugten Weiterbildung der Erfindung vorgesehen, daß der Ringabschnitt zusätzlich Seitenkeile aufweist, die beim Schwenken des Winkelhebels zwischen das innere und das äußere Holmstück bzw. eine innere in das äußere Holmstück eingesetzteStützmuffe eingreifen.

Eine andere Ausgestaltung der Erfindung zeichnet sich dadurch aus, daß das Sperrglied ein zwischen der Muffe und dem inneren Holmstück angeordneter, sich in Einschubrichtung verjüngender, gerader Keil ist, dessen vom Anlageabschnitt bzw. von der Anlagefläche abgewandte Oberseite des Keils an einer entsprechend geneigten, in der Muffe vorgesehenen Fläche gleitend anliegt, wobei der Keil auf der Oberseite einen kleineren Reibungskoeffizienten aufweist als auf der Anlagefläche.

Hierdurch wird erreicht, daß der Keil durch die zwischen ihm und dem inneren Holmstück wirkende Reibungskraft sowohl in Auszugsrichtung als auch in Einschubsrichtung einwandfrei mitgenommen wird, wenn das innere Holmstück eine Verschiebebewegung ausführt, so daß die das innere Holmstück im äußeren haltende Klemmkraft verringert bzw. verstärkt wird.

Um die verschiedenen Reibungskoeffizienten für die Anlagefläche bzw. die Gleitfläche an der Oberseite des Keils zu realisieren, ist ferner vorgesehen, daß der die Oberseite tragende Teil des Keils aus einem anderen Material besteht, als der die Anlagefläche aufweisende Keil.

Ein bevorzugtes Ausführungsbeispiel der Erfindung ist dadurch gekennzeichnet, daß der Keil mit einem nach außen von der Muffe vorstehenden Betätigungsglied versehen ist.

Eine andere vorteilhafte Ausführungsform der Erfindung ist dadurch gekennzeichnet, daß das Sperrglied eine oder mehrere im wesentlichen radial angeordnete elastische Zungen aufweist, mderen den oder die Anlageabschnitte bildenden freien Kanten in Einschubsrichtung vor den radial äußeren Enden der Zungen liegen, wobei die freien Kanten der elastischen Zungen bei in ihrer Freigabestellung befindlichen Zungen einen Abstand zueinander aufweisen, der größer ist als der Außendurchmesser des inneren Holmstücks, und daß die elastischen Zungen in Einschubsrichtung verschwenkbar sind, so daß die freien Kanten der elastischen Zungen mit dem inneren Holmstück verklemmbar sind.

Sobald die erfindungsgemäß vorgesehenen elastischen Zungen in ihrer Sperrstellung sind, aus der heraus sie durch eine Auszugbewegung des inneren Holmstücks aus dem äußeren in ihre Freigabestellung verschwenkbar sind, werden sie, wenn eine Kraft in Einschubsrichtung wirkt, vom inneren Holmstück weiter in Sperrichtung verschwenkt, so daß ihre freien Kanten das innere Holmstück noch fester im äußeren Holmstück verklemmen. Ein wesentlicher Vorteil der als Sperrglieder dienenden elastischen Zungen besteht darin, daß sie nur sehr wenig Platz in axialer Richtung in Anspruch nehmen, ohne daß dadurch die sich selbst verstärkende Klemmwirkung in irgendeiner Weise beeinträchtigt wird.

Bei einer vorteilhaften Ausgestaltung der Erfindung ist vorgesehen, daß zum Verschwenken der elastischen Zungen Andruckmittel an einer auf die Muffe aufschraubbaren Überwurfmutter vorgesehen sind.

Hierdurch wird es auf praktische und einfache Weise ermöglicht, den elastischen Zungen ein Verschwenken in ihre Freigabestellung zu ermöglichen, um eine Verkürzung des Gabelbaums zu erreichen. Dabei ist es vorteilhafterweise nicht erforderlich, daß die erfindungsgemäß vorgesehene, die Andruckmittel für die elastischen Zungen tragende Überwurfmutter sehr fest anzuziehen, da es ausreicht, daß die Klemmwirkung der elastischen Zungen auf das innere Holmstück des Gabelbaums so groß ist, daß die Zungen bei einer geringfügigen Einschubsbewegung in Sperrichtung mitgenommen werden, wodurch sich ein absolut sicherer Klemmeingriff der Zungen am inneren Holmstück ergibt.

Ferner ist es vorteilhaft, wenn die elastischen Zungen an einem Ring angeformt sind, der in die Muffe eingesetzt ist, wobei der Ring in eine Ringnut der Muffe eingesetzt ist und sich an einer ringförmigen Schulter abstützt.

Um eine besonders dauerhafte, gegen äußere Einflüsse wie z.B. Seewasser und Sand unempfindliche Ausführungsform der Erfindung zu schaffen ist vorgesehen, daß der Ring (40) aus Federstahl besteht.

Eine andere Weiterbildung der Erfindung zeichnet sich dadurch aus, daß die Zungen an der Muffe angeformt sind. Hierdurch wird die Herstellung und Montage des Gabelbaums wesentlich vereinfacht, wobei es insbesondere von Vorteil ist, daß die elastischen Zungen mit der Muffe ein einziges Bauteil bilden, so daß sie nicht verlorengehen können.

Um die Reibungskräfte zwischen den inneren Holmstücken und den Sperrgliedern zu vergrößern, ist vorgesehen, daß die inneren Holmstücke im Längenverstellbereich eine mit einer Riffelung versehene Oberfläche aufweisen.

Hierdurch wird die Mitnahme der Sperrglieder durch die inneren Holmstücke sowohl in ihre Freigabestellung als auch in Sperrichtung verbessert.

Ein weiteres Ausführungsbeispiel zeichnet sich dadurch aus, daß die inneren Holmstücke im Längenverstellbereich eine vorzugsweise durch Sandstrahlen aufgerauhte Oberfläche aufweisen.

Die Erfindung wird im folgenden beispielsweise anhand der Zeichnung näher beschrieben; in dieser zeigt:

Fig. 1 einen Längsschnitt durch ein erstes Ausführungsbeispiel einen längenverstellbaren Gabelbaums im Bereich der Verbindungsvorrichtung,

Fig. 2 einen Längsschnitt durch ein zweites Ausführungsbeispiel eines längenverstellbaren Gabelbaums im Bereich der Verbindungseinrichtung,

Fig. 3 einen Querschnitt durch das Ausführungsbeispiel nach Fig. 2,

Fig. 4 eine Draufsicht auf die Verbindungsvorrichtung eines längenverstellbaren Gabelbaums nach einem dritten Ausführungsbeispiel,

Fig. 5 einen Querschnitt durch einen Gabelbaum nach Fig. 4,

Fig. 6 einen Längsschnitt durch ein viertes Ausführungsbeispiel eines längenverstellbaren Gabelbaums im Bereich der Verbindungseinrichtung,

Fig. 7 einen Längsschnitt durch ein weiteres Ausführungsbeispiel eines längenverstellbaren Gabelbaums im Bereich der Verbindungseinrichtung,

Fig. 8 eine perspektivische Ansicht eines Federstahlrings für einen längenverstellbaren Gabelbaum nach Fig. 7 und

Fig. 9 eine perspektivische Ansicht einer Muffe mit elastischen Zungen für die Verbindungseinrichtung eines längenverstellbaren Gabelbaums.

In den verschiedenen Figuren der Zeichnung sind einander entsprechende Bauteile mit gleichen Bezugszeichen bezeichnet.

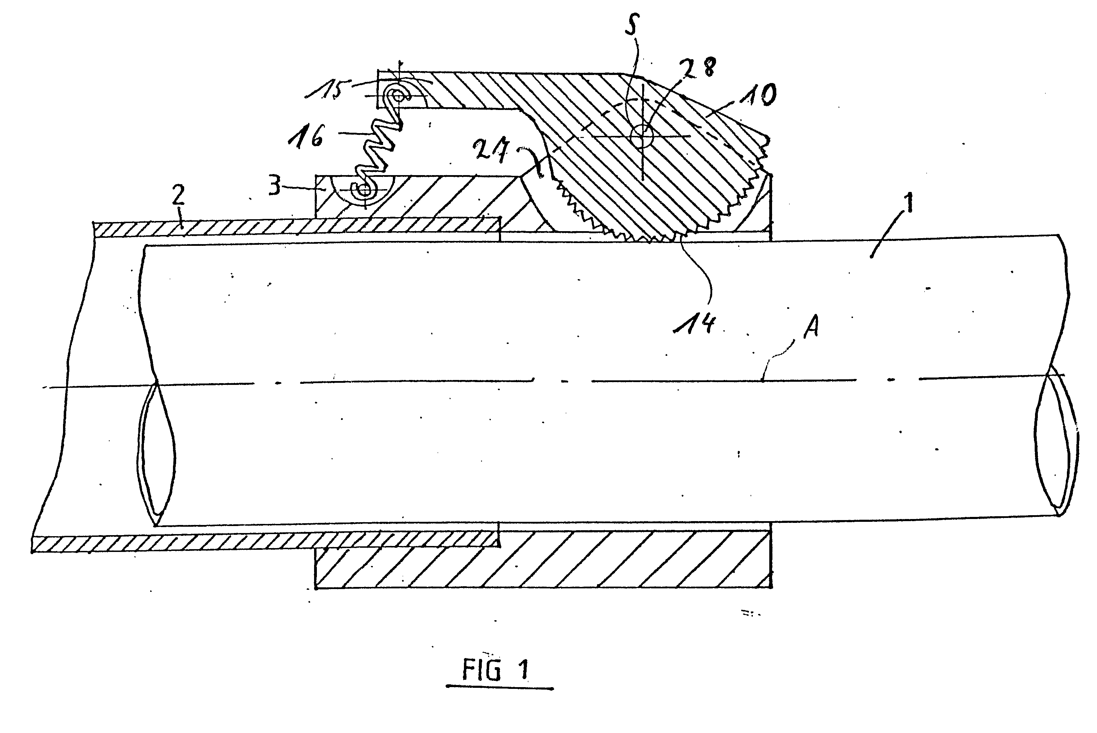

Nach Fig. 1 ist ein inneres Holmstück 1, das vorzugsweise einem hinteren Gabelbaumteil zugeordnet ist, in ein äußeres Holmstück 2, das zu einem vorderen Gabelbaumteil gehört, teleskopisch eingeschoben. Auf das freie Ende des äußeren Holmstücks 2 ist eine Muffe 3 aufgesteckt und fest mit dem äußeren Holmstück 2 in üblicher Weise verbunden.

Die Muffe 3 weist zwei radial nach außen vorstehende Anlenkschenkel 27 auf, von denen jedoch nur einer dargestellt ist. Zwischen den Anlenkschenkeln 27 erstreckt sich senkrecht zur Längsachse A der Holmstücke 1, 2 ein Lagerstift 28, dessen Längsachse eine Schwenkachse S für einen auf dem Lagerstift 28 gelagerten Exzenter 10 bildet. Der Exzenter 10 besitzt einen bogenförmigen Abschnitt, der einem Anlageabschnitt 14 zugeordnet und als gekrümmter Keil ausgebildet ist, so daß der radiale Abstand der Oberfläche des Anlageabschnitts 14 in Richtung vom äußeren Holmstück 2 zum inneren Holmstück 1 stetig zunimmt.

In nicht dargestellter Weise ist die Form des Anlageabschnitts 14 entsprechend der äußeren Oberfläche des inneren Holmstücks 1 ausgebildet.

Am Exzenter 10 ist ein Hebel 15 angebracht, der sich im wesentlichen vom Lagerstift 28 in etwa parallel zur Längsachse A der Holmstücke 1, 2 erstreckt. Zwischen dem freien Ende des Hebels 15 und einem dem äußeren Holmstück 2 zugeordneten Abschnitt der Muffe 3 ist eine Druckfeder 16 angeordnet die den Exzenter 10 in Fig. 1 in Uhrzeigerrichtung vorspannt.

Die beschriebene Verbindungseinrichtung für einen längenverstellbaren Gabelbaum nach Fig. 1 funktioniert wie folgt:

Um das innere Holmstück 1 weiter in das äußere Holmstück 2 einzuschieben, wird der Hebel 15 entgegen der Kraft der Feder 16 in Gegenuhrzeigerrichtung verschwenkt, so daß der Exzenter 10 mit einem Bereich seines Anlageabschnitts 14 dem inneren Holmstück 1 gegenüberliegt, dessen radialer Abstand zum Lagerstift 28 relativ klein ist, so daß der freie Abstand zwischen dem Anlageabschnitt 14 und der gegenüberliegenden inneren Oberfläche der Muffe 3 größer ist als der Außendurchmesser des inneren Holmstücks 1. Jetzt kann das innere Holmstück 1 beliebig im äußeren Holmstück 2 verschoben werden, insbesondere kann es frei in das äußere Holmstück 2 eingeschoben werden.

Anschließend wird der Hebel 15 wieder losgelassen, so daß die Feder 16 über den Hebel 15 den Exzenter 10 so weit verschwenkt, daß ein Bereich des Anlageabschnitts 14 mit dem innen Holmstück 1 in Eingriff tritt, dessen radialer Abstand zum Lagerstift 28 so ist, daß der Exzenter 10 das innere Holmstück 1 gegen die Muffe 3 und das äußere Holmstück 2 drückt. Jetzt ist das innere Holmstück 1 fest im äußeren Holmstück 2 klemmend gehalten.

Wirkt nun auf das innere Holmstück 1 eine Kraft in Einschubsrichtung, die versucht das innere Holmstück 1 weiter in das äußere Holmstück 2 einzuschieben, so wird infolge der kraftschlüssigen Verbindung zwischen dem inneren Holmstück 1 und dem Exzenter 10 dieser weiter in Sperrichtung, also in Fig. 1 in Uhrzeigerrichtung, verschwenkt, wodurch der vom Exzenter 10 auf das innere Holmstück 1 ausgeübte Anpreßdruck vergrößert wird, da ein Bereich des Anlageabschnitts 14 mit dem inneren Holmstück 1 in Eingriff tritt dessen Abstand zum Lagerstift 28 noch größer ist. Hierdurch wird eine Selbstsicherung der vom Exzenter 10 bewirkten Klemmverbindung zwischen dem äußeren und dem inneren Holmstück 2 bzw. 1 erzielt, da infolge der Verkleinerung des freien Abstandes zwischen dem am inneren Holmstück 1 anliegenden Bereich des Anlageabschnitts 14 und der gegenüberliegenden inneren Oberfläche der Muffe 3 bewirkt wird.

Soll das innere Holmstück1 jedoch aus dem äußeren Holmstück 2 herausgezogen werden, um die Länge des Gabelbaums zu vergrößern, so wird der Exzenter 10 vom inneren Holmstück 1 in umgekehrter Weise entgegen dem Uhrzeigersinn in Freigaberichtung verschwenkt, wodurch der Abstand zwischen Anlageabschnitt 14 und der damit zusammenwirkenden inneren Oberfläche der Muffe 3 vergrößert wird, so daß der Anpreßdruck abnimmt.

Damit läßt sich das innere Holmstück 1 ohne weiteres aus dem äußeren Holmstück 2 herausziehen, da der Exzenter 10 selbsttätig in Richtung seiner Freigabestellung verschwenkt wird.

Sobald die Auszugsbewegung beendet wird, drückt die Feder 16 den Exzenter 10 wieder in seine Sperrstellung, so daß das innere und das äußere Holmstück 1, 2 sicher gegen eine Einschubbewegung miteinander verklemmt sind.

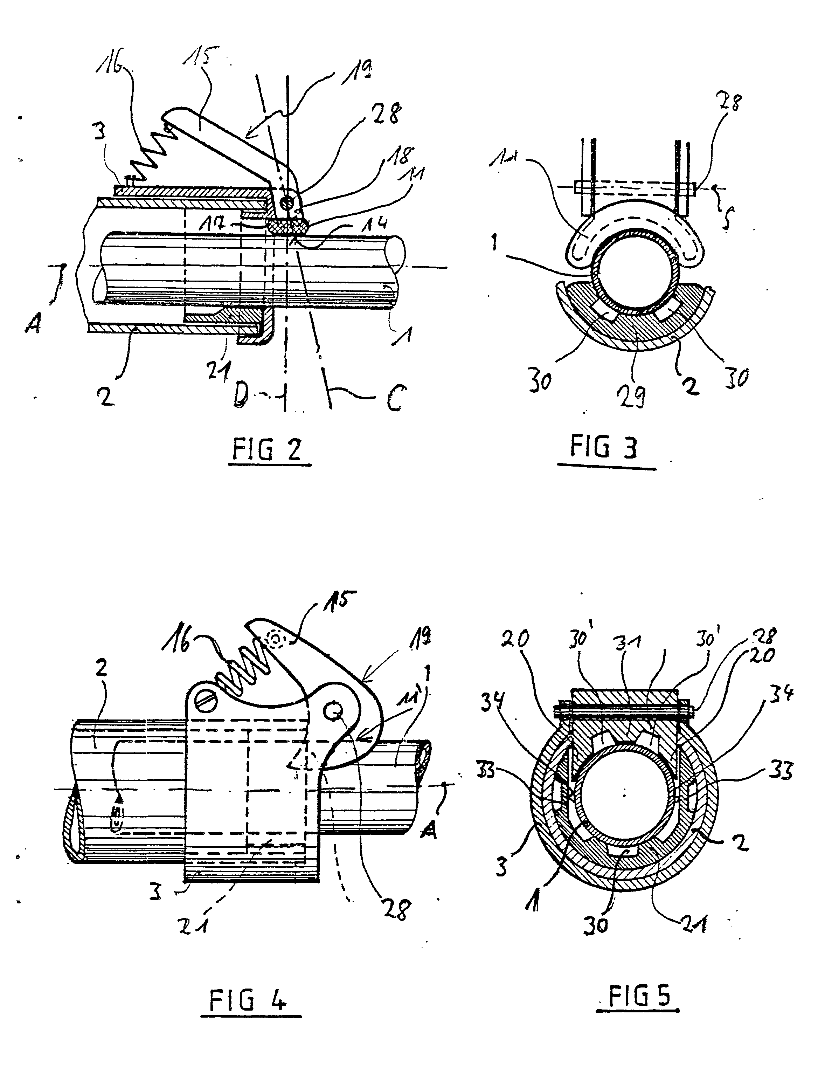

Nach Fig. 2 und 3 ist wiederum ein inneres Holmstück 1 in ein äußeres Holmstück 2 teleskopisch eingeschoben, wobei auf dem äußeren Holmstück 2 eine Muffe 3 befestigt ist. Die Muffe 3 trägt mittels eines Lagerstiftes 28 einen Winkelhebel 19, der einen Sperrhebel 18 und einen Betätigungshebel 15 aufweist. Am freien Ende des Sperrhebels 18 ist ein in etwa halbkreisförmiger Ringabschnitt 11 angeordnet, der sich umfangsmäßig höchstens um 180° um das innere Holmstück 1 herumerstreckt. In bezug auf das innere Holmstück 1 diametral gegenuberliegend zum Ringabschnitt 11 ist eine Stützmuffe 21 in das äußere Holmstück 2 eingesetzt, um den Durchmesserunterschied zwischen dem inneren Holmstück 1 und dem äußeren Holmstück 2 auszugleichen. Dabei weist die Stützmuffe 21 sich in Axialrichtung erstreckende Ausnehmungen 30 auf, so daß der Zwischenraum zwischen dem inneren und dem außeren Holmstück 1, 2 durchgespült werden kann, um ein Verklemmen des inneren Holmstücks 1 mit dem äußeren Holmstück 2 infolge von Verunreinigungen, z.B. Sand, zu verhindern.

Zwischen dem freien Ende des Betätigungshebels 15 und der Muffe 3 ist wiederum eine Druckfeder 16 vorgesehen, die den Winkelhebel 19 in Sperrichtung beaufschlagt, so daß der Ringabschnitt 11 klemmend auf das innere Holmstück 1 gedrückt wird, so daß dieses zwischen dem Ringabschnitt 11 und der Stützmuffe 21 fest eingeklemmt ist. Die dem äußeren Holmstück 2 zugewandte axiale Kante 17 des Ringabschnitts 11 ist abgerundet und bildet so einen Keil, der sich zwischen die Muffe 3 und das innere Holmstück 1 zwängt.

Die Längenverstellung mittels der beschriebenen Verbindungseinrichtung für inneres und äußeres Holmstück 1, 2 eines Gabelbaums erfolgt im wesentlichen wie anhand von Fig. 1 beschrieben. Dabei wird zum Herausziehen des inneren Holmstücks 1 aus dem äußeren Holmstück 2 der Ringabschnitt 11 in Fig. 2 nach rechts mitgenommen, so daß die abgerundete Kante 17 und der Anlageabschnitt 14 des Ringabschnitts 11 außer Klemmeingriff mit dem inneren Holmstück 1 gebracht werden.

Wird umgekehrt das innere Holmstück 1 mit einer Kraft in Einschubrichtung beaufschlagt, so wird zum einen der Winkelhebel 19 so verschwenkt, daß der Ringabschnitt 11 fester gegen das innere Holmstück 1 gedrückt wird und gleichzeitig wird die abgerundete Kante 17 tiefer zwischen das innere Holmstück 1 und die Muffe 3 gedrückt, so daß die Klemmverbindung verstärkt wird.

Dabei ist es vorteilhafterweise vorgesehen, daß die Längsachse C des Sperrhebels 18 einen genügend großen spitzen Winkel mit einer Senkrechten D zur Längsachse A der Holmstücke 1, 2 einschließt, so daß der Winkelhebel 19 die Schwenkstellung nicht erreichen kann, in der der Abstand zwischen dem Anlageabschnitt 14 und der Stützmuffe 21 am kleinsten ist.

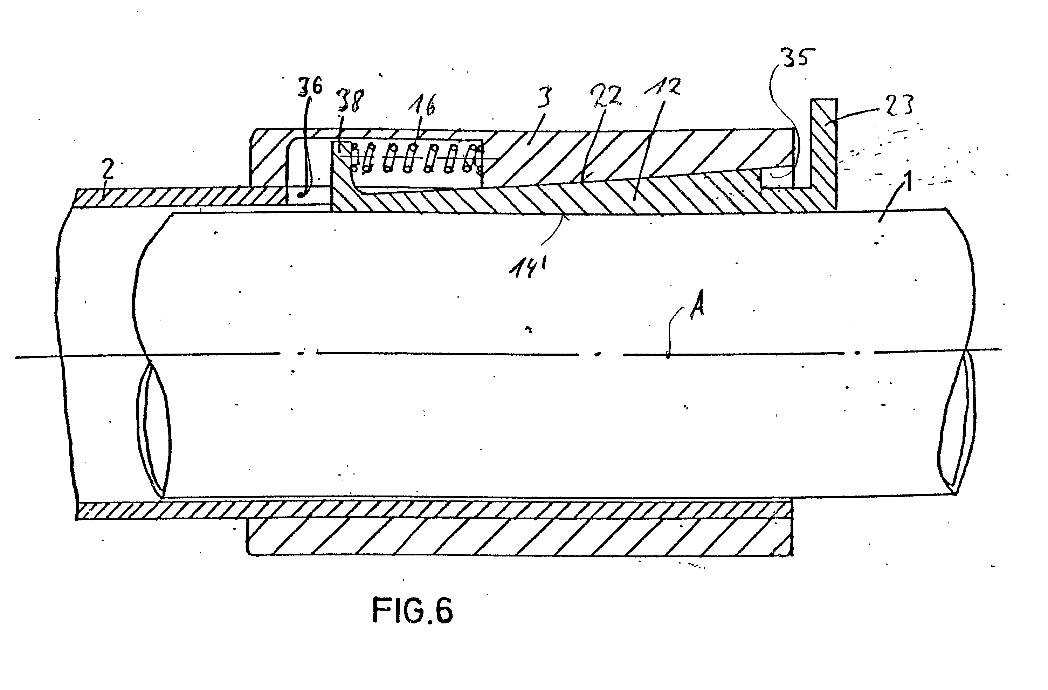

Die Verbindungsvorrichtung für einen längenverstellbaren Gabelbaum nach den Fig. 4 und 5 entspricht im wesentlichen der nach den Fig. 2 und 3, so daß hier nur die Unterschiede erläutert zu werden brauchen.

Der am Winkelhebel 19 vorgesehene Ringabschnitt 11' weist einen Mittelbereich 31 und zwei Seitenkeile 20 auf, deren Außenflächen in Einschubsrichtung gesehen in einem spitzen Winkel aufeinander zulaufen. Zwischen den Mittelbereich 31 und den Seitenkeilen 31 sind axiale Aussparungen 30' vorgesehen.

Die Stützmuffe 219 besitzt zwei sich im wesentlichen senkrecht zur Längsachse A der Holmstück 1, 2 und senkrecht zum Lagerstift 28 erstreckende Stege 33 auf, deren Wandflächen 34 parallel zueinander verlaufen. Werden der am Winkelhebel 19 vorgesehene Ringabschnitt 11' und damit auch die Seitenkeile 30 in ihre Sperrstellung verschwenkt, so treten die Seitenkeile 20 zwischen das innere Holmstück 1 und die Wandflächen 34 an der Stützmuffe 21, wodurch eine Verklemmung des inneren Holmstücks 1 mit der Stützmuffe 21 bewirkt wird, die zusätzlich zur Klemmwirkung des mittleren Abschnitts 31 des Ringabschnitts 11' erfolgt.

Die Längenverstellung eines Gabelbaums mit einer derartigen Verbindungsvorrichtung erfolgt entsprechend der anhand von Fig. 2 und 3 beschriebenen Längenverstellung.

Nach Fig. 6 ist an dem äußeren Holmstück 2, in das das innere Holmstück 1 teleskopisch eingeschoben ist, eine Muffe 3 befestigt, die eine Führungsnut 35 für einen geraden Keil 12 aufweist, die mit einem Schlitz 36 im äußeren Holmstück 2 ausgerichtet ist. Der gerade Keil 12, der sich in Einschubrichtung verjüngt, liegt mit seiner Oberseite gleitend an einer Fuhrungsfläche 22 der Nut 35 an, die unter einem spitzen Winkel zur Längsachse A der Holmstücke 1, 2 verläuft. Die Anlagefläche 14' des geraden Keils 12 ist entsprechend der Oberfläche des inneren Holmstücks 1 ausgebildet.

An seinem in der Muffe 3 angeordneten Ende weist der gerade Keil 12 ein Federwiderlager 38 auf, an dem sich eine Druckfeder 16 abstützt, die mit ihrem anderen Ende so an der Muffe 3 anliegt, daß sie den Keil 12 in Sperrichtung vorspannt. Am aus der Muffe 3 herausragenden Ende des Keils 14 ist ein Betätigungsglied 23 angeordnet, um den Keil 12 entgegen der Kraft der Feder 16 aus seiner Sperrstellung in eine Freigabestellung zu verschieben.

Um die Gleitbewegung des geraden Keils 12 auf der Führungsfläche 37 der Muffe 3 zu verbessern, kann der Keil 12 auf seiner Oberseite mit einem den Reibungskoeffizienten der Oberseite verkleinernden Belag versehen sein. Entsprechend kann auch die Anlagefläche 14' des Keils 12 am inneren Holmstück 1 mit einem den Reibungskoeffizienten vergrößernden Belag beschichtet sein. Ähnlich ist es in nicht dargestellter Weise möglich, den Keil 12 aus unterschiedlichen Materialien herzustellen, so daß die gewünschten Reibungskoeffizienten für die Anlagefläche 14 bzw. seine Oberseite erzielt werden.

Im folgenden wird die Längenverstellung eines Gabelbaums mit einer anhand von Fig. 6 beschriebenen Verbindungsvorrichtung beschrieben:

Soll das innere Holmstück 1 weiter in das äußere Holmstück 2 eingeschoben werden, so wird der Keil 12 mit dem Betätigungsglied 23 von Hand entgegen der Kraft der Feder 16 aus der Muffe 3 so weit herausgezogen, bis der freie Abstand zwischen der Anlagefläche 14' des Keils 12 und der entsprechenden inneren Oberfläche des äußeren Holmstücks 2 größer ist als der Außendurchmesser des inneren Holmstücks 1. Jetzt kann dieses beliebig weit in das äußere Holmstück 2 eingeschoben werden.

Anschließend wird der Keil 12 losgelassen, so daß er von der Feder 16 so weit in die Muffe 3 hineingeschoben wird, wobei er auf der Führungsfläche 22 gleitend radial nach innen versetzt wird, bis er das innere Holmstück 1 gegen das äußere Holmstück 2 preßt.

Wird das innere Holmstück 1 nun von einer Kraft in Einschubrichtung beaufschlagt, so wird der kraftschlüssig am inneren Holmstück 1 anliegende Keil 12 vom inneren Holmstück 1 weiter mitgenommen, wodurch die vom Keil 12 bewirkte Andruckkraft weiter verstärkt wird, so daß eine Einschubbewegung des inneren Holmstücks 1 in das äußere Holmstück 2 praktisch nicht erfolgen kann. Somit ist das innere Holmstück 1 fest und sicher gegen Einschubkräfte im äußeren Holmstück 2 eingeklemmt.

Soll das innere Holmstück 1 zur Verlängerung des Gabelbaums aus dem äußeren Holmstück 2 herausgezogen werden, so wird der Keil 12 ebenfalls aus der Muffe 3 in Richtung seiner Freigabestellung herausgezogen, so daß die Klemmung des inneren Holmstücks 1 am äußeren Holmstück 2 so weit verringert wird, daß diese Bewegung ohne Betätigung des Keils 12 möglich ist.

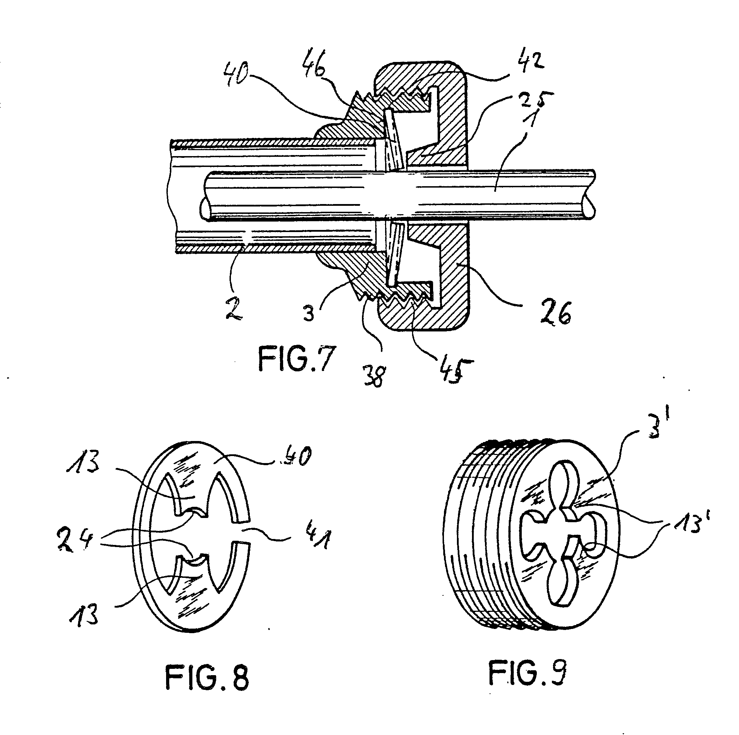

Anhand der Fig. 7 bis 9 wird ein weiteres Ausführungsbeispiel der Erfindung beschrieben.

An dem äußeren Holmstück 2, in das das innere Holmstück 1 teleskopisch eingeschoben ist, ist eine Muffe 3 befestigt, die mit einem Außengewinde 38 versehen ist. Auf das Außengewinde 38 der Muffe 3 ist eine Überwurfmutter 26 mit ihrem Innengwinde 45 aufgeschraubt, die zentrisch lose vom inneren Holmstück 1 durchgriffen ist.

Innerhalb der Muffe 3 ist ein Federstahlring 40 angeordnet, der sich an einer Schulter 46 der Muffe 3 abstützt und in einer umlaufenden Ringnut 42 sicher gegen ein Herausfallen aus der Muffe 3 gehalten ist.

Wie Fig. 8 zeigt, besitzt der Federstahlring 40 einen Schlitz 41, um sein Einsetzen in die Nut 42 zu erleichtern. Am Federstahlring 40 sind zwei radial verlaufende einander gegenüberliegende elastische Zungen 13 angeordnet, deren freie Kanten 24 entsprechend der Querschnittsform des inneren Holmstücks 1 ausgebildet sind.

Befindet sich der Federstahlring 40 bzw. die elastischen Zungen 13 in ihrer Ruhelage, so ist der Abstand zwischen den freien Kanten 24 größer als der Außendurchmesser des inneren Holmstücks 1, so daß das inneren Holmstück 1 beliebig zwischen den elastischen Zungen 13 verschoben werden kann.

An der Überwurfmutter 26 sind rein schematisch dargestellte Andruckmittel 25 ausgebildet, die die elastischen Zungen 13 in ihre Sperrstellung drücken. Hierzu kann insbesondere eine in Fig. 7 nicht dargestellte Feder den Andruckmitteln 25 zugeordnet sein, so daß eine Schwenkbewegung der elastischen Zungen 13 gegen die Federkraft der Andruckmittel 25 ermöglicht ist.

Anstelle einer Muffe 3 mit eingesetztem Federstahlring 40 kann auch eine Muffe 3' am äußeren Holmstück 2 befestigt sein, die wie in Fig. 9 dargestellt ist, einstükkig mit elastischen Zungen 13' ausgebildet ist. Dabei können vier einander jeweils paarweise diametral gegenüberliegende elastische Zungen 13' vorgesehen sein.

Die Längenverstellung eines Gabelbaums mit einer Verbindungsvorrichtung, wie sie anhand der Fig. 7 bis 9 beschrieben ist, wird folgendermaßen vorgenommen:

Solange die Überwurfmutter 26 nur teilweise auf die Muffe 3 aufgeschraubt ist, befinden sich die elastischen Zungen 13 in ihrer Freigabestellung, so daß das innere Holmstück 1 beliebig im äußeren Holmstück 2 verschoben werden kann. Sobald das innere Holmstück 1 dann in seine gewünschte Stellung gebracht wurde, bzw. noch weiter in das äußere Holmstück 2 eingeschoben wurde, wird die Überwurfmutter 26 weiter auf die Muffe 3 aufgeschraubt, wobei die insbesondere mit einer Druckfeder versehenen Andruckmittel 25 die elastischen Zungen 13 aus ihrer Freigabestellung in die Sperrstellung drücken, so daß das innere Holmstück 1 im äußeren Holmstück 2 festgeklemmt ist.

Soll nun eine Verlängerung des Gabelbaums vorgenommen werden, so brauchen die inneren Holmstücke 1 nur aus den äußeren Holmstücken 2 herausgezogen zu werden, wobei sie die elastischen Zungen 13 entgegen der Federkraft der Andruckmittel 25 in ihre Freigabestellung verschwenken. Ist dann die gewünschte Länge erreicht, so werden die elastischen Zungen 13 erneut in ihre Sperrstellung gedrückt, so daß die freien Kanten 24 in Klemmeingriff mit dem inneren Holmstück 1 treten.

Wird das innere Holmstück 1 jedoch in Einschubsrichtung mit einer Kraft beaufschlagt, so werden die elastischen Zungen 13, die mit ihren freien Kanten 24 schneidenartig am inneren Holmstück 1 angreifen, weiter in Sperrichtung verschwenkt, wodurch der Klemmdruck der elastischen Zungen 13 auf das innere Holmstück 1 vergrößert wird. Die von den elastischen Zungen 13 auf das innere Holmstück 1 ausgeübte Klemmkraft wird dabei entsprechend der in Einschubsrichtung wirkenden Kraft vergrößert, so daß eine absolut sichere Verklemmung des inneren Holmstücks 1 über die elastischen Zungen 13 mit dem äußeren Holmstück 2 erhalten wird.

Um das Verschieben der einzelnen Sperrglieder in Sperrichtung bzw. in Freigaberichtung durch das innere Holmstück 1 stets sicherzustellen, kann das innere Holmstück 1 bei allen Ausführungsbeispielen mit einer Riffelung versehen oder vorzugsweise durch Sandstrahlen aufgerauht sein.

**Ansprüche**

1. Längenverstellbarer Gabelbaum mit einem vorderen und einem hinteren Gabelbaumteil, wobei Endabschnitte von Holmstücken vorzugsweise des hinteren Gabelbaumteils in rohrförmige Holmstücke des vorderen Gabelbaumteils eingesetzt und mit diesen in ausgewählter Einschublänge durch jeweils ein über eine Muffe mit dem äußeren Holmstück verbundenes Sperrglied kraftschlüssig verbindbar sind, dadurch **gekennzeichnet,** daß jedes in seiner Sperrstellung an der Außenseite des zugehörigen inneren Holmstücks (1) klemmend anliegende Sperrglied (10, 11, 11', 12, 13) so an der Muffe (3) gelagert ist, daß es (10, 11, 11', 12, 13) beim Herausziehen des inneren Holmstücks (1) aus dem äußeren (2) in eine Freigabestellung bewegbar ist.

2. Längenverstellbarer Gabelbaum nach Anspruch 1, dadurch **gekennzeichnet,** daß das Sperrglied (10, 11, 11', 12, 13) durch Federkraft in seine Sperrstellung vorgespannt ist.

3. Längenverstellbarer Gabelbaum nach Anspruch 1 oder
2, dadurch **gekennzeichnet,** daß ein Anlageabschnitt des Sperrglieds (10, 11, 11', 12, 13), mit dem es am inneren Holmstück (1) anliegt, einen Querschnitt aufweist, der demjenigen des zugeordneten Umfangsabschnitts des inneren Holmstücks (1) entspricht.

4. Längenverstellbarer Gabelbaum nach Anspruch 1, 2 oder 3, dadurch **gekennzeichnet,** daß die das Sperrglied (10, 11, 11', 12, 13) tragende Muffe (3) innerhalb des äußeren Holmstücks (2) angeordnet ist.

5. Längenverstellbarer Gabelbaum nach einem der vorhergehenden Ansprüche, dadurch **gekennzeichnet,** daß das Sperrglied (10, 11, 11') ein um eine zur Längsachse (A) der Holmstücke (1, 2) senkrechte Achse (S) schwenkbarer gebogener Keil ist, der sich in Einschubrichtung verjüngt.

6. Längenverstellbarer Gabelbaum nach Anspruch 5, dadurch **gekennzeichnet,** daß der Keil als bogenförmiger Abschnitt an einem Exzenter (10) ausgebildet ist, dessen Anlageabschnitt (14) einen entgegen der Einschubrichtung stetig zunehmenden radialen Abstand von der Schwenkachse (S) aufweist, wobei der Abstand der Schwenkachse (S) von der Außenseite des inneren Holmstücks (1) größer als der kleinste Radius, jedoch kleiner als der größte Radius des bogenförmigen Abschnitts ist.

7. Längenverstellbarer Gabelbaum nach Anspruch 6, dadurch **gekennzeichnet,** daß der Anlageabschnitt (14) des Exzenters (10) einen in Keilrichtung zackenförmigen Verlauf aufweist.

8. Längenverstellbarer Gabelbaum nach Anspruch 5 bis 7, dadurch **gekennzeichnet,** daß dem Exzenter (10) ein Betätigungselement (15) zugeordnet ist.

9. Längenverstellbarer Gabelbaum nach Anspruch 8, dadurch **gekennzeichnet,** daß das Betätigungselement ein sich in Einschubrichtung erstreckender Hebel (15) ist, der von einer die Vorspannkraft erzeugenden Feder (16) beaufschlagt ist.

10. Längenverstellbarer Gabelbaum nach Anspruch 5, dadurch **gekennzeichnet,** daß der Keil als ein sich höchstens über 180° erstreckender, in seiner Sperrstellung fest gegen die Oberfläche des inneren Holmstücks (1) gedrückter Ringabschnitt (11, 11') ausgebildet ist, dessen in Einschubrichtung gelegene Kante (17) abgerundet ist und in der Sperrstellung zwischen das innere und das äußere Holmstück (1, 2) bzw. die Muffe (3) eingreift, wobei der Ringabschnitt (11, 11') am Ende eines Sperrhebels (18) angeordnet ist, der um die Schwenkachse (S) schwenkbar gelagert ist.

Längenverstellbarer Gabelbaum nach Anspruch 10, dadurch **gekennzeichnet,** daß der Sperrhebel (18) zusammen mit einem von der Federkraft beaufschlagten, sich im wesentlichen in Einschubrichtung erstreckenden Betätigungshebel (15) einen Winkelhebel (19) bildet.

12. Längenverstellbarer Gabelbaum nach Anspruch 10 oder 11, dadurch **gekennzeichnet, daß** der Sperrhebel (18) in der Sperrstellung mit einer senkrechten zur Längsachse (A) einen spitzen Winkel ( $\alpha$ ) einschließt.

13. Längenverstellbarer Gabelbaum nach Anspruch 10 bis 12, dadurch **gekennzeichnet, daß** der Ringabschnitt (11') zusätzlich Seitenkeile (20) aufweist, die beim Schwenken des Winkelhebels (19) zwischen das innere und das äußere Holmstück (1, 2) bzw. eine innere in das äußere Holmstück (2) eingesetzte Stützmuffe (21) eingreifen.

14. Längenverstellbarer Gabelbaum nach Anspruch 1 bis 4, dadurch **gekennzeichnet, daß** das Sperrglied ein zwischen der Muffe (3) und dem inneren Holmstück (1) angeordneter, sich in Einschubsrichtung verjüngender, gerader Keil (12) ist, dessen vom Anlageabschnitt bzw. von der Anlagefläche (14') abgewandte Oberseite des Keils (12) an einer entsprechend geneigten, in der Muffe (3) vorgesehenen Fläche (22) gleitend anliegt.

15. Längenverstellbarer Gabelbaum nach Anspruch 14, dadurch **gekennzeichnet, daß** der Keil (12) auf der Oberseite einen kleineren Reibungskoeffizienten aufweist als auf der Anlagefläche (14').

16. Längenverstellbarer Gabelbaum nach Anspruch 15, dadurch **gekennzeichnet, daß** der die Oberseite tragende Teil des Keils (12) aus einem anderen Material besteht, als der die Anlagefläche (14') aufweisende Teil.

17. Längenverstellbarer Gabelbaum nach Anspruch 13 bis 16, dadurch **gekennzeichnet, daß** der Keil (12) mit einem nach außen von der Muffe (3) vorstehenden Betätigungsglied (23) versehen ist.

18. Längenverstellbarer Gabelbaum nach einem der Ansprüche 1 bis 4,
dadurch **gekennzeichnet, daß** das Sperrglied eine oder mehrere im wesentlichen radial angeordnete elastische Zungen (13) aufweist, deren den oder die Anlageabschnitte bildenden freien Kanten (24) in Einschubsrichtung vor den radial äußeren Enden der Zungen (13) liegen.

19. Längenverstellbarer Gabelbaum nach Anspruch 18, dadurch **gekennzeichnet, daß** die freien Kanten (24) der elastischen Zungen (13) bei in ihrer Freigabestellung befindlichen Zungen (13) einen Abstand zueinander aufweisen, der größer ist als der Außendurchmesser des inneren Holmstücks (1), und daß die elastischen Zungen (13) in Einschubsrichtung verschwenkbar sind, so daß die freien Kanten (24) der elastischen Zungen (13) mit dem inneren Holmstück (1) verklemmbar sind.

20. Längenverstellbarer Gabelbaum nach Anspruch 19, dadurch **gekennzeichnet, daß** zum Verschwenken der elastischen Zungen (13) Andruckmittel (25) an einer auf die Muffe (3) aufschraubbaren Überwurfmutter (26) vorgesehen sind.

21. Längenverstellbarer Gabelbaum nach Anspruch 18 bist 20, dadurch **gekennzeichnet, daß** die elastischen Zungen (13) an einem Ring (40) angeformt sind, der in die Muffe (3) eingesetzt ist.

22. Längenverstellbarer Gabelbaum nach Anspruch 21, dadurch **gekenzeichnet, daß** der Ring (40) in eine Ringnut (42) der Muffe (3) eingesetzt ist und sich an einer ringförmigen Schulter (46) abstützt.

23. Läangenverstellbarer Gabelbaum naach Anspruch 21 oder 22, dadurch **gekennzeichnet. daß** der Ring (40) aus Federstahl besteht.

24. Längenverstellbarer Gabelbaum nach Anspruch 18 bis 20, dadurch **gekennzeichnet, daß** die Zungen (13') an der Muffe (3) angeformt sind.

25. Längenverstellbarer Gabelbaum nach einem der vorhergehenden Ansprüche,
dadurch **gekennzeichnet, daß** die inneren Holmstücke (1) im Längenverstellbereich eine mit einer Riffelung versehene Oberfläche aufweisen.

26. Längenverstellbarer Gabelbaum nach einem der Ansprüche 1 bis 25,
dadurch **gekennzeichnet, daß** die inneren Holmstücke (1) im Längenverstellbereich eine vorzugsweise durch Sandstrahlen aufgerauhte Oberfläche aufweisen.

FIG 1

EP 0 294 839 A1

FIG 2

FIG 3

FIG 4

FIG 5

EP 0 294 839 A1

FIG.6

EP 0 294 839 A1

FIG.7

FIG.8

FIG.9

Europäisches
Patentamt

# EUROPÄISCHER RECHERCHENBERICHT

Nummer der Anmeldung

EP 88 10 9299

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 173 968 (AKUTEC) * Seite 8, Zeile 26 - Seite 9, Zeile 2; Figuren 4,8 * | 1-3,5-12,25 | B 63 B 35/82 |
| A | | 17 | |
| Y | US-A-3 589 757 (MOONEY) * Das ganze Dokument * | 1-3,5-12,25 | |
| Y | GB-A-2 155 882 (SCHUTZ-WERKE) * Seite 1, Zeilen 5-54; Figuren 1-4; Zusammenfassung * | 1 | |
| Y | GB-A-1 327 574 (SINTACEL) * Seite 2, Zeilen 24-30; Figuren 1,2 * | 1 | |
| A | GB-A-2 010 378 (CARLSSON) * Figuren 1-5; Zusammenfassung * | 18-24 | |
| A | AT-A- 340 208 (STABEG) * Figuren 1,2 * | 14-16 | |

|  |
|---|
| **RECHERCHIERTE SACHGEBIETE (Int. Cl.4)** |
| B 63 B<br>F 16 B |

Der vorliegende Recherchenbericht wurde für alle Patentansprüche erstellt

| Recherchenort | Abschlußdatum der Recherche | Prüfer |
|---|---|---|
| DEN HAAG | 24-08-1988 | HUNT A.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)